# EUROPÄISCHE PATENTSCHRIFT

(11) **EP 1 936 905 B1**
(45) Veröffentlichungstag und Bekanntmachung des Hinweises auf die Patenterteilung: **17.09.2014**
(21) Anmeldenummer: 06026369.6
(22) Anmeldetag: 19.12.2006
(51) Int. Cl.: H04L 29/06, H04L 12/22

(54) **Verfahren zum Betreiben eines VoIP-Endgerätes und VoIP-Endgerät**
Method for operating a VoIP terminal and VoIP terminal
Procédé destiné à l'utilisation d'un terminal VoIP et terminal VoIP

(43) Veröffentlichungstag der Anmeldung: 25.06.2008
(73) Patentinhaber: Unify GmbH & Co. KG, 81379 München (DE)
(72) Erfinder: Falk, Rainer, Dr., 85386 Eching (DE); Kohlmayer, Florian, 82319 Starnberg (DE)
(74) Vertreter: Fritzsche, Thomas

(56) Entgegenhaltungen:
- WO-A-03/034681
- US-A1- 2006 136 717
- US-B1- 6 971 005

## Beschreibung

Die Erfindung betrifft ein Verfahren zum Betreiben eines VoIP-Engerätes gemäß dem Oberbegriff des Anspruchs 1 sowie ein VoIP-Endgerät gemäß dem Gattungsbegriff des Anspruchs 13.

Nicht zuletzt durch die Verbreitung und Dichte von breitbandigen Internetzugängen ist Sprachkommunikation unter Nutzung von Internet Protokoll (IP) basierten Datennetzen attraktiver geworden. Diese als Voice over IP (VoIP) bekannte Form der Kommunikation erlaubt dank der Fähigkeiten von lokalen Drahtlos-Netzwerken, wie es beispielsweise ein nach dem IEEE 802.11 Standard, oder seinen Derivaten, ausgebildetes Wireless Local Area Network (WLAN) Netzwerk bietet, auch eine schnurlose Kommunikation wie sie bisher beispielsweise von nach dem Digital Enhanced Cordless Telecommunications (DECT) Standard ausgebildeten Geräten geboten wird. Ähnlich wie bei DECT-Geräten ermöglicht auch die mittels WLAN abgewickelte VoIP-Kommunikation eine schnurlose Telefonie in privaten Netzwerken, wie beispielsweise Firmennetze.

Insbesondere in Firmennetzen bestehen aber ein erhöhtes Sicherheitsbedürfnis und zugleich auch eine höhere Gefahr der Ausnutzung von Sicherheitslücken. Diese ergeben sich bei der beschriebenen WLAN-basierten VoIP Kommunikation vor allem dadurch, dass die hierfür verwendeten Endgeräte verloren gehen oder gestohlen werden können und dadurch aufgrund ihrer häufig über die Funktionen der Telefonie hinausgehenden Funktionen, wie beispielsweise Emailzugang zum Firmennetz, Kontakt- sowie Termindaten, nicht-autorisierten Dritten den Zugang zu sensiblen Daten ermöglicht wird.

Zur Erhöhung der Sicherheit ist es bisher bekannt, beim Einschalten eines WLAN Telefons vom Nutzer die Eingabe einer PIN zu verlangen. Ferner ist es bekannt, die Ortsinformation eines Teilnehmers für eine Entscheidung bezüglich der Gewährung eines Zugriffs zu berücksichtigen (Location based Access Control).

WO 03/034681 offenbart ein Verfahren zur Zugangsberechtigung eines schnurlosen Endgerätes, wobei dem Endgerät ein Zugriff, über ein drahtloses Netzwerk, auf ein Dienst eines entfernten Anbieters freigeschaltet wird wenn das Gerät erfolgreich vom Netzwerk authentifiziert worden ist.

Auch ist es bekannt, bei auf dem Betriebssystem Symbian basierenden sogenannten Smartphones eine Entwendung zu melden, wobei diese Meldung zur Folge hat, dass diesen Geräten über ein öffentliches Mobilfunknetz ein Kommando zu senden, welches dazu führt, dass alle auf dem Gerät gespeicherten Daten gelöscht werden. Dieses Verfahren ist als "remote wipe" bekannt.

Solange das Gerät sich aber nicht in ein Mobilfunknetz einbucht, sei es weil die PIN nicht erraten wurde oder weil ein unberechtigter Dritter den remote wipe Mechanismus kennt und ein Einbuchen verhindert, besteht die Gefahr des Zugriffs auf die lokal im Gerät gespeicherten Daten.

Die der Erfindung zugrunde liegende Aufgabe ist es, ein Verfahren sowie eine Anordnung anzugeben, welche eine sicherere Anwendung von Schnurlos-VoIP in privaten Netzen ermöglicht.

Gelöst wird diese Aufgabe ausgehend von dem Verfahren gemäß dem Oberbegriff des Anspruchs 1 durch dessen kennzeichnende Merkmale sowie ausgehend durch die Anordnung gemäß dem Gattungsbegriff des Anspruchs 13 durch dessen kennzeichnende Merkmale.

Bei dem erfindungsgemäßen Verfahren zum Betreiben eines schnurlosen, insbesondere nach dem IEEE 802.11 Standard oder seinen Derivaten funktionierenden VoIP-Endgerätes in einem privaten, insbesondere Firmen-Netzwerk, bei dem das VoIP-Endgerät für einen Zugang zum Netz autorisiert ist, wird auf durch das Gerät mit Hilfe von einen Datenzugriff ermöglichenden Standardschnittstellen abrufbare Daten erst dann seitens des VoIP-Endgerätes ein Zugriff freigeschaltet, wenn das VoIP-Endgerät erfolgreich in dem privaten Netzwerk eingebucht worden ist.

Hierdurch wird der Zugriff auf vertrauliche Daten erschwert, falls das VoIP-Endgerät verloren geht oder entwendet wurde und ein unberechtigter Dritter auf diese Art in den Besitz des VoIP-Endgeräts gekommen ist. Da ein Zugriff nur gewährt wird, nachdem das Gerät im Netzwerk eingebucht wurde, muss der Dritte sich im Funkversorgungsbereich des Netwerks befinden. Ein erfolgreicher Angriff, d.h. Zugriff auf die auf dem VoIP-Endgerät gespeicherten vertraulichen Daten zu erlangen, wird erschwert, da der Angreifer mit dem entwendeten VoIP-Endgerät sich dazu im Funkversorgungsbereichs des privaten Netzwerks aufhalten muss. Da die erfindungsgemäße erfolgende Freigabe nur bei Einbuchung in das private Netzwerk erfolgt, bei dem das VoIP-Gerät autorisiert ist, nützt dem unberechtigten Dritten auch ein Einbuchungsvorgang in fremde Netze nicht, um an die Daten zu gelangen.

Bei den Standardschnittstellen kann es sich um physikalische Schnittstellen (z.B. USB, seriell, IrDA), um logische Schnittstellen (Geräte-interne Programmierschnittstelle) wie auch eine Anzeige im Display (Benutzerschnittstelle) handeln.

Die Gültigkeit der Freigabe endet, wenn das VoIP-Gerät nicht mehr im privaten Netzwerk eingebucht ist. Weiterhin kann die Gültigkeit der Freigabe auch nach einer maximalen Gültigkeitsdauer beendet werden.

Vorteilhaft ist es dabei, wenn das Verfahren derart weitergebildet wird, dass nach der Einbuchung seitens des VoIP-Endgerätes ein die Freigabe anzeigendes Statusflag gesetzt wird.

Dieses Statusflag kann im VoIP-Gerät intern in einem Speicher realisiert sein. Es wird bei erfolgreicher Anmeldung durch das VoIP-Gerät selbst gesetzt. Alternativ zur Freischaltung bei einer erfolgreicher Anmeldung am privaten Netzwerk kann die Freischaltung auch erst dann erfolgen, wenn das private Netzwerk die Freischaltung signalisiert durch eine an das VoIP-Endgerät übertragene Nachricht. Dies ermöglicht es dem privaten Netzwerk, ein in der Anmeldedatenbank des privaten Netzwerks als verloren oder entwendet gekennzeichnetes VoIP-Endgerät derart zu behandeln, dass auch bei einer erfolgreichen Anmeldung am privaten Netzwerk keine Freischaltung zum Zugriff auf sensible Daten erfolgt.

Hierdurch wird eine einfache Methode zur Verfügung gestellt, mit der eine Freigabesignalisierung erfolgt, da in der Regel als Flag nur das Setzen eines Informationsbits genügt. Hierzu kann zum Beispiel ein in Datenpaketheadern ungenutztes Bit verwendet werden, so dass eine Implementierung der Erfindung in vorhandene Netze problemlos und aufwandsarm erfolgen kann.

Eine alternative Weiterbildung besteht darin, im Rahmen des Einbuchens ausgehend von dem privaten Netzwerk eine erste Nachricht an das VoIP-Endgerät zu übermitteln und aufgrund des Empfangs der ersten Nachricht die Freigabe erfolgen zu lassen. Im Vergleich zum vorhergehenden Ansatz bietet sich dies insbesondere dann an, wenn zusätzliche Daten zur Freigabe erforderlich sind. Beispielsweise falls sich der Rahmen bzw. Umfang, in dem die Daten freigegeben werden, ändert.

Weiterhin ist es möglich, dem VoIP-Endgerät zu übermitteln, dass die Freigabe nur einen Teil der sensiblen Daten betrifft. Dadurch ist festlegbar, welche Daten unter bestimmten Anmeldeverfahren zugreifbar sind. Beispielsweise kann dadurch erreicht werden, dass auf vollständige Daten nur zugreifbar sind, wenn das VoIP-Endgerät über einen WLAN-Zugangspunkt im Bürogebäude mit dem privaten Netwerk verbunden ist, wogegen bei Zugang über einen WLAN-Zugangspunkt im Außenbereich des Werksgeländes nur eingeschränkter Zugriff zu Daten gewährt ist, z.B. nur auf Kontaktdaten.

Wird das Verfahren derart weitergebildet, dass im Fall der Präsenz einer das Endgerät als entwendet kennzeichnenden Information innerhalb des privaten Netzwerks, aufgrund des Empfangs der ersten Nachricht der Teil der abrufbaren Daten gelöscht wird, welcher auf im VoIP-Endgerät gespeichert ist, so wird hierdurch erreicht, dass im Falle dass der unberechtigte Dritte es doch schafft, sich unerkannt ins private Netz einzubuchen, ihm dennoch keine Zugriff gewährt wird. Zudem hat dieser Ansatz den Vorteil, dass die sensiblen Daten dann dauerhaft vor Zugriffen Unberechtigter geschützt sind.

Vorteilhaft ist es ferner, wenn die Freigabe derart erfolgt, dass seitens des VoIP-Endgerätes die Nutzung der Standardschnittstellen entsperrt wird. Mit dieser Weiterbildung wird eine wirkungsvolle Realisierung bereitgestellt, da ein Zugriff auf Daten in der Regel über solche Schnittstellen erfolgen wird. Macht man die Funktion dieser Schnittstellen abhängig von der Freigabe, wird somit auch ein Zugriff auf die Daten auf reguläre Weise nahezu unmöglich.

Besonders vorteilhaft ist es auch das Verfahren derart weiterzubilden, dass zumindest ein Teil der abrufbaren Daten, insbesondere der auf dem VoIP-Endgerät gespeicherte Teil, verschlüsselt gespeichert in einem Endgerätespeicher abgelegt wird. Hierdurch wird Manipulationsversuchen, die das Ziel haben, an die gesperrten bzw. nicht freigeschalteten Daten unter Umgehung der gesperrten, insbesondere durch die Standardschnittstellen gegebenen, regulären Datenzugriffsmöglichkeiten, beispielsweise durch direkte Manipulation der Speicherbausteine, heranzukommen, Rechnung getragen, und einem unberechtigten Dritten, der Erfolg einer solchen Manipulation dadurch erschwert, dass er ohne zugehörigen Verschlüsselungsschlüssel keine sensiblen Informationen entnehmen kann.

Dieser Vorteil wird noch verstärkt, wenn das Verfahren derart weitergebildet wird, dass ein für die Entschlüsselung der gespeicherten Daten notwendiger Schlüssel derart auf dem VoIP-Endgerät, insbesondere in einem sogenannten Trusted Plattform Modul, gespeichert wird, dass er erst nach erfolgreicher Einbuchung für die Entschlüsselung verfügbar ist, da ein derartiges Modul die genannten Manipulationsversuche erschwert, so dass ein Angreifer gar nicht oder zumindest nur mit erhöhtem Aufwand an den Schlüssel und damit auch an die Daten kommt.

In einer Weiterbildung ist der für die Entschlüsselung der gespeicherten Daten notwendige Schlüssel erst nach einer im Rahmen der Einbuchung erfolgenden Authentisierung, insbesondere gemäß dem Extensible Authentication Protocol "EAP", dem Session Initiation Protocol "SIP" bei einem SIP-Server und/oder bei einem Management-Server, für die Entschlüsselung verfügbar.

Bevorzugt erfolgt dies insbesondere dadurch, dass ein für die Entschlüsselung der gespeicherten Daten notwendiger Schlüssel derart auf dem VoIP-Endgerät, insbesondere in einem sogenannten Trusted Plattform Modul, gespeichert wird, dass er erst nach Empfang der ersten Nachricht für die Entschlüsselung verfügbar ist.

Alternativ bzw. ergänzend ist es jedoch von noch größerem Vorteil, wenn das Verfahren derart weitergebildet wird, dass ein für die Entschlüsselung der gespeicherten Daten notwendiger Schlüssel im Rahmen des Einbuchens, insbesondere als Teil der ersten Nachricht, die insbesondere als eine Anmeldebestätigungsnachricht ausgestaltet ist, übermittelt wird. Hierdurch ist sichergestellt, dass ein Verschlüsselungsschlüssel nicht verfügbar ist, solange die Freigabe der Daten noch nicht erfolgt ist, so dass die Manipulationsversuche fruchtlos bleiben. Dieser Ansatz ist insbesondere bei Geräten, die über kein Trusted Plattform Modul verfügen, als Alternative hierfür geeignet. Bei Vorhandensein eines Trusted Plattform Modul erhöht es die Sicherheit der Daten noch mehr.

Die Sicherheit lässt sich umso mehr erhöhen, wenn das Verfahren derart weitergebildet wird, dass zumindest einmal, vorzugsweise für jedes, Einbuchen oder Abmelden des VoIP-Endgerätes ein neuer Schlüssel generiert wird, weil ein möglicher Weise im Vorfeld einer Entwendung des Geräts erfolgtes Abfangen bzw. Detektieren des Schlüssel entschärft wird. Dazu wird beim Abmelden des VoIP-Endgerätes vom privaten Netzwerk ein neuer kryptographischer Schlüssel erzeugt, mit dem die vertraulichen Daten auf dem Endgerät verschlüsselt werden. Dieser Schlüssel wird im privaten Netzwerk gespeichert, sodass er bei der nächsten erfolgreichen Anmeldung des Endgerätes am privaten Netzwerk dem Endgerät wieder bereitgestellt werden kann. Der Schlüssel kann entweder auf dem Endgerät erzeugt werden und vom Endgerät bei der Abmeldung an das private Netz übertragen werden, oder er wird im privaten Netzwerk erzeugt und bei der Abmeldung an das Endgerät übertragen.

Das erfindungsgemäße VoIP-Endgerät ermöglicht die Realisierung des Verfahrens, da es Mittel zur Durchführungen des erfindungsgemäßen Verfahrens aufweist, so dass hierdurch dessen Vorteile wirksam werden.

Weitere Einzelheiten sowie Vorteile der Erfindung werden anhand Ausführungsbeispiel der Erfindung wird nachfolgend an Hand einer Zeichnung näher erläutert.

Dabei zeigen in schematischer Darstellung
- Figur 1: ein der Erfindung zugrunde liegendes beispielhaftes Szenario,
- Figur 2: ein schematisches Signaldiagram eines Ausführungsbeispiels des erfindungsgemäßen Verfahrens,
- Figur 3: ein Flussdiagram des Ausführungsbeispiels des erfindungsgemäßen Verfahrens.

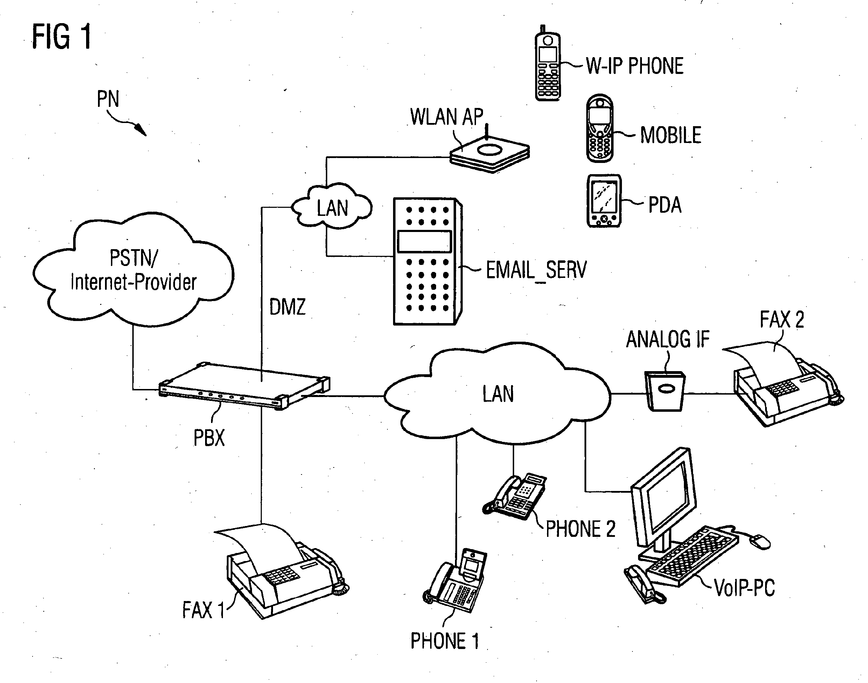

In Figur 1 ist ein beispielhaftes Szenario dargestellt, welches einen Ausschnitt möglicher Elemente eines privaten Netzes PN im Sinne der Erfindung zeigt.

Herzstück des dargestellten Netzwerks PN ist eine private Nebenstelleneinrichtung PBX, die derart ausgestaltet ist, dass sie sowohl klassischen Telekommunikationsgeräten, wie einem dargestellten ersten Faxgerät FAX1, sowie Geräten neuerer Generation, welche zur Kommunikation über ein Internetprotokoll-basierte Netze, wie lokale Netze LAN und/oder das Internet, kommunizieren können, die Anbindung zu einem Telekommunikationsprovider oder einem Internetprovider nach Art einer klassischen privaten Nebenstelleneinrichtung bereitstellt.

Hierzu sind in dem dargestellten beispielhaften Szenario über lokale Datennetze LAN schurgebundene Geräte wie ein erstes standardmäßiges Telefon PHONE1 und ein zweites als Komforttelefon ausgestaltetes Telefon PHONE2 oder ein zur Sprachkommunikation geeigneter Computer VoIP-PC, die zur VoIP-Kommunikation über IP-Netze wie den lokalen Netzen LAN ausgestaltet sind

Ferner sind auch analoge Telekommunikationsendgeräte anschließbar, wie das dargestellte zweite Faxgerät FAX2, welches zu diesem Zweck an eine entsprechende Schnittstelleneinrichtung ANALOG IF an das lokale Netz LAN angebunden ist.

Daneben können auch schnurlos kommunizierende Geräte wie beispielsweise zur Drahtloskommunikation wie insbesondere nach dem IEEE 802.11 Standard ausgestaltete Wireless Local Area Network (WLAN) Geräte, zur Sprachkommunikation genutzt werden.

Solche Geräte können zum Beispiel ein Dual-Mode Handy W_MOBILE oder eigens für eine schnurlose VoIP-Kommunikation konzipiertes Endgerät, WLAN PDA oder Smartphone W_IP PHONE sein, die über ein ebenso im beispielhaften Szenario dargestelltes Wireless LAN Accesspoint WLAN_AP den hierfür erforderlichen Zugang zu einem IP-Netz erhalten. In der Regel bieten diese Geräte dabei mehr als nur die Möglichkeit Sprachkommunikation zu realisieren. Beispielsweise erlauben sie in der Regel auch Zugriffe und Darstellung von Daten, wie beispielsweise Emails, die von einem entsprechenden Server EMAIL_SERV abgerufen werden. Wenn es ein mit einer VoIP Soft-und ggf. Hardware (Headset) ausgerüsteter PC VoIP-PC ist, dann bieten sich auch noch erweiterte Datenzugriffe, wie etwa auf Datenbanken an.

In diesem privaten Umfeld ist daher von äußerster Wichtigkeit, die nur diesem Kreis oder nur dem Nutzer eines Endgerätes verfügbare - sensible - Daten zu schützen.

Gerade bei den mobilen WLAN Endgeräten dieses Szenarios kann es aber leicht zu einem Verlust der Geräte kommen, welcher diese in die Hände von unberechtigten Dritten fallen lässt.

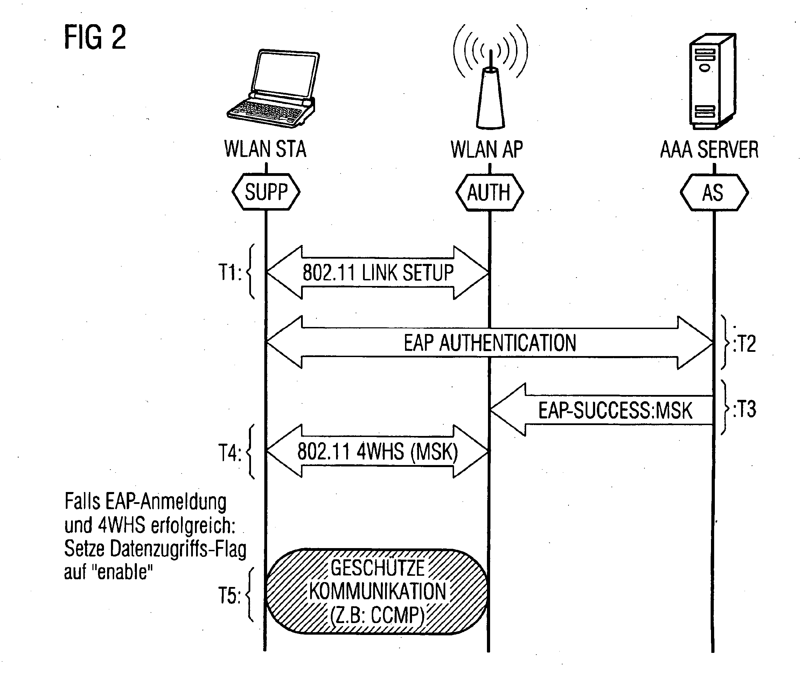

Ausgehend von einem solchen Szenario greift nun gemäß einem Ausführungsbeispiel das erfindungsgemäße Verfahren derart ein, dass ein Zugriff auf Daten, insbesondere sensible Daten, erst dann möglich ist, wenn ein entsprechendes Statusflag, die Nutzung der Datenschnittstellen, wie beispielsweise IrDA, Bluetooth, RS232, USB oder einen Lumberg-Plug, freischaltet. Dieses Statusflag, im dargestellten Beispiel als Datenzugriffs-Flag bezeichnet, soll gemäß dem in Figur 2 dargestellten Beispiel erst dann auf "enable" gesetzt werden, wenn eine WLAN-Authentisierung erfolgt ist.

Zur Authentisierung von Knoten bzw. Rechnern wird das sogenannte EAP- (Extensible Authentication Protocol) Protokoll eingesetzt. Die Figur 2 zeigt ein Signaldiagramm zur Darstellung eines Authentisierungsvorgangs bei einem herkömmlichen WLAN-Netz. Das EAP-Protokoll wird bei WLAN zur Absicherung des Netzwerkzugangs verwendet. Vielfältige konkrete Authentisierungsverfahren, sogenannte EAP-Methoden, können über das EAP-Protokoll transportiert werden, z.B. EAP-TLS, EAP-AKA, PEAP-MSChapV2. Bei der Authentisierung wird ein kryptographischer Schlüssel bzw. Sitzungsschlüssel MSK, EMSK (MSK: Master-Session Key; EMSK: Extended Master Session Key) ermittelt, der nachfolgend zum Schutz der Datenkommunikation, beispielsweise bei der Link-Layer-Verschlüsselung verwendet wird. Die Authentisierung eines Teilnehmers erfolgt zwischen dem Teilnehmer (Supplicant) und einem Authentisierungsserver (AAA-Server). Bei erfolgreicher Authentisierung sendet der Authentisierungsserver das Ergebnis der Authentisierung und den aus der Authentisierung stammenden Sitzungsschlüssel MSK an den Authentikator, beispielsweise einem WLAN-Access-Point AP. Die Kommunikation zwischen dem Zugangsknoten bzw. Access-Point AP und dem Authentisierungsserver erfolgt üblicherweise über das Radius- oder Diameter-Datenübertragungs-Protokoll. Dabei wird der Sitzungsschlüssel MSK als Datenattribut an den Zugangsknoten AP als Teil einer EAP-Success-Nachricht gesendet. Der übertragene Sitzungsschlüssel MSK wird anschließend in einem 802.11 4-Wege-Handshake 802.11 4WHS zwischen dem Teilnehmer und den Zugangsknoten gemäß dem 802.11 IEEE Standard eingesetzt. Mit erfolgreichem Abschluss kann dann das Datenzugriffs-Flag auf "enable" gesetzt werden und eine geschützte Kommunikation erfolgen.

Alternativ oder ergänzend ist es auch denkbar, das Datenzugriffs-Flag erst nach der Zuweisung einer IP-Adresse über DHCP auf "enable" zu setzten. Auch ist es denkbar, dies alternativ oder ergänzend nach einer Registrierung an einem Anwendungsserver, insbesondere einem SIP-Server (VoIP, HiPath), oder nach Empfang einer Freigabe Nachricht ("Release Data") zu tun.

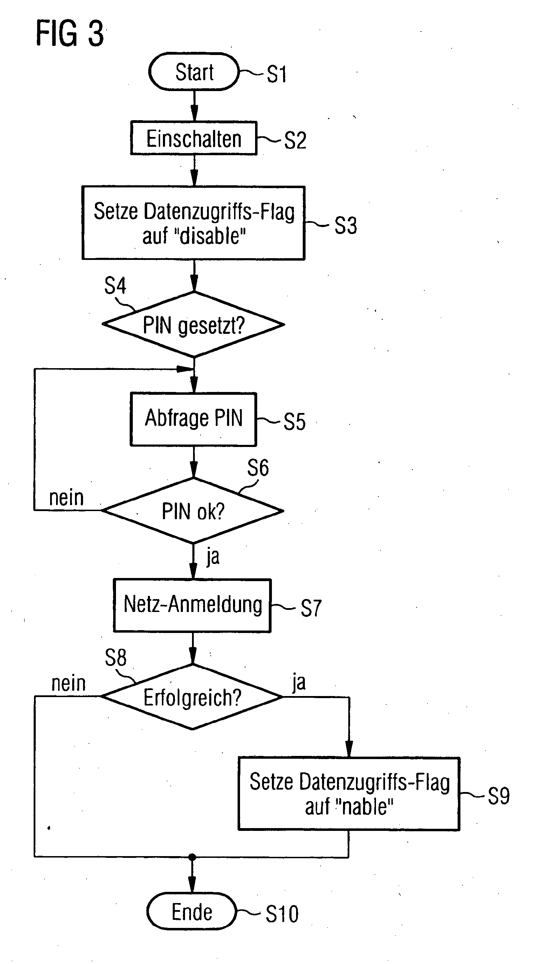

In Figur 3 ist ein Ausführungsbeispiel mit anhand eines Flussdiagramms dargestellten detaillierten Schritten zum Setzen des Datenzugriffs-Flags gezeigt.

Das Setzen des Flags geht in einem ersten Schritt S1 von einem Zustand "Start" durch ein in einem zweiten Schritt S2 durchgeführtes Einschalten des Gerätes zunächst in einem dritten Schritt S3 dazu über das Datenzugriffs-Flag auf "disable" zu setzen. Durch dieses frühzeitige explizite Sperren des Zugriffs werden Manipulationsversuche über die Standardschnittstellen in der relativ anfälligen Anfangsphase nach dem Einschalten des Geräts verhindert.

In einem vierten Schritt S4 wird überprüft, ob eine das Gerät freischaltende PIN gesetzt ist. Ist dies der Fall, wird der Benutzer des Gerätes in einem fünften Schritt S5 nach der PIN gefragt.

In einem sechsten Schritt S6 wird dann überprüft, ob die eingegebene PIN in Ordnung, dass heißt gültig, ist. Ist dies der Fall, erfolgt in einem siebten Schritt S7 eine Anmeldung ans Netz. Andernfalls wird die Abfrage im sechsten Schritt S6 wiederholt und die Nutzung des Geräts gegebenenfalls bei einer gewissen Anzahl von Fehleingaben zumindest temporär gesperrt.

Die im siebten Schritt S7 angesprochene Netzanmeldung kann dann beispielsweise die oben beschriebene WLAN-Authentisierung oder eine Anmeldung an einen SIP-Server sein, deren Erfolg in einem achten Schritt S8 überprüft ist.

Abhängig vom Überprüfungsergebnis kann nach Art einer Programmschleife im Negativfall, d.h. wenn die Netzanmeldung nicht erfolgreich war, eine erneute Überprüfung erfolgen, die ebenfalls nach Erreichen eines Abbruchkriteriums zur Sperrung der Nutzung führen kann, soweit nicht der Positivfall des erfolgreichen Anmeldens am Netz eintritt.

Beim in der Figur 3 dargestellten Ablauf ist aber keine derartige Schleife vorgesehen, so dass im Negativfall das Statusflag nicht gesetzt und somit der Datenzugriff seitens des Endgerätes gesperrt ist.

Ist das Anmelden erfolgreich verlaufen, wird die Schleife durchbrochen und in einem neunten Schritt S9 das Datenzugriffs-Flag auf "enable" gesetzt und somit die Standardschnittstellen nutzbar.

Mit diesem Setzen gelangt der Ablauf in einem zehnten Schritt S10 in den Zustand "Ende", so dass das Gerät nun für eine bestimmungsgemäßen Nutzung zur Verfügung steht.

Wird nun im Rahmen der bestimmungsgemäßen Nutzung versucht Daten abzurufen, wird dem Zugriff stets eine Abfrage, ob das Datenzugriffs-Flag auf "enable" gesetzt ist, vorgestaltet. Hierauf ist die Erfindung aber nicht beschränkt. Denkbar ist auch, dass eine Überprüfung ob Konnektivität zum privaten Netz, beispielsweise Firmennetz, über WLAN besteht - d.h. ob der WLAN-Link aktiv ist - vorgeschaltet oder alternativ hierzu, ob der SIP-Server erreichbar ist (bestehende Anmeldung, Antwort auf eine Ping-Nachricht).

## Patentansprüche

1. Verfahren zum Betreiben eines schnurlosen, insbesondere nach dem IEEE 802.11 oder seinen Derivaten funktionierenden VoIP-Endgerätes (PHONE 1, PHONE 2, VOIP-PC, W-IP PHONE) in einem privaten, insbesondere Firmen-Netzwerk, bei dem das VoIP-Endgerät für einen Zugang zum Netz autorisiert ist, wobei auf durch das Gerät mit Hilfe von einen Datenzugriff ermöglichenden Standardschnittstellen abrufbare Daten erst dann seitens des VoIP-Endgerätes ein Zugriff freigeschaltet wird, wenn des VoIP-Endgerät erfolgreich in dem privaten Netzwerk eingebucht worden ist, **dadurch gekennzeichnet, dass** nach der Einbuchung seitens des VoIP-Endgerätes ein die Freigabe anzeigendes Statusflag gesetzt wird.

2. Verfahren nach Anspruch 1, **dadurch gekennzeichnet, dass**
a) im Rahmen des Einbuchens ausgehend von dem privaten Netzwerk eine erste Nachricht an das VoIP-Endgerät übermittelt wird,
b) aufgrund des Empfangs der ersten Nachricht die Freigabe erfolgt.

3. Verfahren nach einem der vorhergehenden Ansprüche,
**dadurch gekennzeichnet, dass** im Fall der Präsenz einer das Endgerät als entwendet kennzeichnenden Information innerhalb des privaten Netzwerks, aufgrund des Empfangs der ersten Nachricht der Teil der abrufbaren Daten gelöscht wird, welcher im VoIP-Endgerät gespeichert ist.

4. Verfahren nach einem der vorhergehenden Ansprüche,
**dadurch gekennzeichnet, dass** die Freigabe derart erfolgt, dass seitens des VoIP-Endgerätes die Nutzung der Standardschnittstellen entsperrt wird.

5. Verfahren nach einem der vorhergehenden Ansprüche,
**dadurch gekennzeichnet, dass** zumindest ein Teil der abrufbaren Daten, insbesondere der auf dem VoIP-Endgerät gespeicherte Teil, verschlüsselt gespeichert in einem Endgerätespeicher abgelegt wird.

6. Verfahren nach dem vorhergehenden Anspruch, dass ein für die Entschlüsselung der gespeicherten Daten notwendiger Schlüssel derart auf dem VoIP-Endgerät, insbesondere in einem sögenannten Trusted Plattform Modul, gespeichert wird, dass er erst nach erfolgreicher Einbuchung für die Entschlüsselung verfügbar ist.

7. Verfahren nach dem vorhergehenden Anspruch, **dadurch gekennzeichnet, dass** der für die Entschlüsselung der gespeicherten Daten notwendige Schlüssel erst nach einer im Rahmen der Einbuchung erfolgenden Authentisierung, insbesondere gemäss dem Extensible Authentication Protocol "EAP", dem Session Initiation Protocol "SIP" bei einem SIP-Server und/oder bei einem Management-Server, für die Entschlüsselung verfügbar ist.

8. Verfahren nach einem der Ansprüche 1 bis 6, **dadurch gekennzeichnet, dass** ein für die Entschlüsselung der gespeicherten Daten notwendiger Schlüssel derart auf dem VoIP-Endgerät, insbesondere in einem sogenannten Trusted Plattform Modul, gespeichert wird, dass er erst nach Empfang der ersten Nachricht für die Entschlüsselung verfügbar ist.

9. Verfahren nach einem der Ansprüche 1 bis 6, **dadurch gekennzeichnet, dass** ein für die Entschlüsselung der gespeicherten Daten notwendiger Schlüssel im Rahmen des Einbuchens, insbesondere als Teil der ersten Nachricht übermittelt wird.

10. Verfahren nach dem vorhergehenden Anspruch, **dadurch gekennzeichnet, dass** zumindest bei einem der Einbuchungs-oder Abmeldevorgänge des VoIP-Endgerätes ein neuer Schlüssel generiert wird.

11. Verfahren nach dem vorhergehenden Anspruch, **dadurch gekennzeichnet, dass** das Generieren jedes Mal erfolgt.

12. VoIP-Endgerät **gekennzeichnet durch** Mittel zur Durchführung der Schritte des Verfahrens nach einem der vorhergehenden Ansprüche.

## Claims

1. Method for the operation of a wireless VoIP terminal, functioning in accordance with IEEE 802.11 or its derivatives (PHONE 1, PHONE 2, VOIP-PC, W-IP PHONE) of a private network, in particular a company network, wherein the VoIP terminal is authorised for accessing to the network, wherein data which can be called up by the device with the aid of standard interfaces enabling data access is only released for access on the part of the VoIP terminal when the VoIP terminal has been successfully inserted in the private network, **characterised in that**, after the insertion, a status flag indicating the release has been set by the VoIP terminal,

2. Method according to claim 1, **characterised in that**
a) within the framework of the insertion, a first message is sent from the private network to the VoIP,
b) release takes place on the basis of reception of the first message.

3. Method according to any one of the preceding claims, **characterised in that**, in the event of the presence of an item of information which characterises the terminal as being deallocated within the private network on the basis of the reception of the first message, the part of the data which can be called up and which is stored in the VoIP terminal will be deleted.

4. Method according to any one of the preceding claims, **characterised in that** release takes place in such a way that the use of the standard interfaces is unblocked on the part of the VoIP terminal.

5. Method according to any one of the preceding claims, **characterised in that** at least a part of the data which can be called up, in particular the part stored on the VoIP terminal, is deposited in a terminal memory, stored encoded.

6. Method according to the preceding claim, **characterised in that** a key necessary for the decoding of the stored data is stored on the VoIP terminal, in particular in what is referred to as a Trusted Platform Module, in such a way that it is only available for decoding after successful insertion.

7. Method according to the preceding claim, **characterised in that** the key necessary for the decoding of the stored data is only available for the decoding after an authentication carried out within the framework of the insertion, in particular in accordance with the Extensible Authentication Protocol "EAP", the Session Initiation Protocol "SJP" on an SIP server, and/or on a management server.

8. Method according to any one of claims 1 to 6, **characterised in that** a key necessary for the decoding of the stored data is stored on the VoIP terminal, in particular in what is referred to as a Trusted Platform Module, in such a way that it is only available for decoding after reception of the first message.

9. Method according to any one of claims 1 to 6, **characterised in that** a key necessary for the decoding of the stored data is transferred within the framework of the insertion, in particular as part of the first message.

10. Method according to the preceding claim, **characterised in that**, at least during one of the insertion or logging-off procedures of the VoIP terminal, a new key is generated.

11. Method according to the preceding claim, **characterised in that** the generation takes place every time.

12. VoIP terminal, **characterised by** means for carrying out the steps of the method according to any one of the preceding claims.

## Revendications

1. Procédé d'exploitation d'un terminal VoIP (PHONE 1, PHONE 2, VOIP-PC, W-IP PHONE) sans fil, fonctionnant en particulier selon IEEE 802.11 ou ses dérivés, dans un réseau privé, en particulier d'entreprise, dans lequel le terminal VoIP est autorisé pour accéder au réseau, dans lequel un accès à des données accessibles par l'appareil à l'aide d'interfaces standard permettant un accès aux données est validé de la part du terminal VoIP seulement quand le terminal VoIP a été enregistré avec succès dans le réseau privé, **caractérisé en ce que** suite à l'enregistrement, un drapeau d'état indiquant la validation est défini de la part du terminal VoIP.

2. Procédé selon la revendication 1, **caractérisé en ce que**
a) dans le cadre de l'enregistrement, en partant du réseau privé, un premier message est transmis au terminal VoIP,
b) la validation a lieu sur la base de la réception du premier message.

3. Procédé selon l'une quelconque des revendications précédentes, **caractérisé en ce qu'**en cas de présence à l'intérieur du réseau privé d'informations identifiant le terminal comme ayant été dérobé, la partie des données accessibles sauvegardée dans le terminal VoIP est supprimée sur la base de la réception du premier message.

4. Procédé selon l'une quelconque des revendications précédentes, **caractérisé en ce que** la validation est effectuée de telle sorte que l'utilisation des interfaces standard est déverrouillée de la part du terminal VoIP.

5. Procédé selon l'une quelconque des revendications précédentes, **caractérisé en ce qu'**au moins une partie des données accessibles, en particulier la partie sauvegardée sur le terminal VoIP, est stockée dans une mémoire de terminal après sauvegarde en mode crypté.

6. Procédé selon la revendication précédente, **caractérisé en ce qu'**une clé nécessaire au décryptage des données sauvegardées est mémorisée sur le terminal VoIP, en particulier dans un module dit Trusted Platform, de telle sorte qu'elle n'est disponible pour le décryptage que suite à un enregistrement réussi.

7. Procédé selon la revendication précédente, **caractérisé en ce que** la clé nécessaire au décryptage des données sauvegardées n'est disponible pour le décryptage que suite à une authentification réalisée dans le cadre de l'enregistrement, en particulier selon le protocole EAP (Extensible Authentication Protocol), le protocole SIP (Session Initiation Protocol), auprès d'un serveur SIP et/ou d'un serveur de gestion.

8. Procédé selon l'une quelconque des revendications 1 à 6, **caractérisé en ce qu'**une clé nécessaire au décryptage des données sauvegardées est mémorisée sur le terminal VoIP, en particulier dans un module dit Trusted Platform, de telle sorte qu'elle n'est disponible pour le décryptage que suite à la réception du premier message.

9. Procédé selon l'une quelconque des revendications 1 à 6, **caractérisé en ce qu'**une clé nécessaire au décryptage des données sauvegardées est transmise dans le cadre de l'enregistrement, en particulier sous la forme d'une partie du premier message.

10. Procédé selon la revendication précédente, **caractérisé en ce qu'**une nouvelle clé est générée pendant au moins l'une des opérations d'enregistrement ou de déconnexion du terminal VoIP.

11. Procédé selon la revendication précédente, **caractérisé en ce que** la génération est effectuée à chaque fois.

12. Terminal VoIP, **caractérisé par** des moyens permettant d'effectuer les étapes du procédé selon l'une quelconque des revendications précédentes.
